# EUROPEAN PATENT SPECIFICATION

(11) **EP 0 728 342 B1**
(45) Date of publication and mention of the grant of the patent: **26.01.2000**
(21) Application number: 94931318.3
(22) Date of filing: 06.10.1994
(51) Int. Cl.: G06K 15/02, B23K 26/06

(54) **SCANNED MARKING OF WORKPIECES**
ABGETASTETES MARKIEREN EINES WERKSTÜCKES
MARQUAGE PAR BALAYAGE DE PIECES D'USINAGE

(30) Priority: 09.11.1993 US 149551
(43) Date of publication of application: 28.08.1996
(73) Proprietor: MARKEM CORPORATION, Keene New Hampshire 03431 (US)
(72) Inventor: EMGE, Garry, J., Keene, NH 03431 (US); CARTER, Stephen, W., Troy, NH 03465 (US)
(74) Representative: Hirsch, Marc-Roger
(86) International application number: US9411407
(87) International publication number: WO9513593

(56) References cited:
- EP-A- 0 135 851
- EP-A- 0 291 461
- EP-A- 0 343 443
- EP-A- 0 522 980

## Description

### Background of the Invention

This invention relates to scanned marking of workpieces.

A typical raster scanned printing system scans a laser beam along a succession of parallel rows on a workpiece, one row at a time, to form a pixel pattern representing a two-dimensional image. Scanning is done by an oscillating mirror. During one direction of an oscillation a single row is scanned. The mirror is then quickly returned to its original position to begin scanning the next row. An optical encoder may be used to gauge the angular position of the mirror, to aid placing the pixel marks at precise locations along each scan row.

The pixel mark may be formed using an ink coated foil that transfers a spot of ink onto the workpiece in response to receiving laser beam energy at a pixel site.

In the marking apparatus disclosed in EP-A-0 135 851, on which the preamble of claim 1 is based, the beam is split and then simultaneously directed at the two marking stations, where the workpieces are simultaneously marked.

### Summary of the Invention

In general, in one aspect, the invention as defined in claims 1 and 27 features a technique for marking pixels on workpieces. The workpieces are positioned at respective marking stations for marking. A beam of radiation is directed along an optical path toward the workpieces. The beam is scanned (e.g., raster scanned) to define an array of pixel positions. A switch routes the beam during the scanning so that for each of the pixel positions the beam may be routed to a selected one of the marking stations to mark one of the pixels on one of the workpieces.

Embodiments of the invention include the following features. The pixels marked on the workpieces are organized as partial prints associated respectively with the different marking stations. A processor causes each of the workpieces to be positioned at each of the marking stations for a period which spans a complete scanning cycle of the beam. There is printing apparatus which responds to the beam for printing different colors of the pixels respectively at different ones of the marking stations. In some examples, the partial prints are different for different workpieces. The marking stations include printing foils which respond to radiation from the beam by depositing pigment or dye. The switch may be an acousto-optic deflector controlled by the processor in response to stored information corresponding to the pixels. The scanning apparatus includes an optical element for sweeping the beam along a scan line, and a mechanical element for moving each of the workpieces in a direction normal to the scan line. The processor causes each workpiece to be moved in succession to each of the marking stations for marking with corresponding ones of the partial prints. In some examples, there are two of the marking stations and the scanning apparatus raster scans a series of scan lines; every other line is scanned in one direction and the intervening lines are scanned in the opposite direction. The switch is arranged to cause marking of pixels on every other line at one of the marking stations, and marking of pixels on the intervening lines at the other of the marking stations. In some examples, the prints for the workpieces at the two marking stations are identical, monochrome prints. In some examples, portions of the partial prints are identical for at least two of the workpieces and other portions (e.g., serial numbers) are different.

The stored image information comprises, for each pixel location, a deflection value and an amplitude value. The stored information is fetched via a DMA channel of a computer during printing. The stored information is represented in a file format (e.g., .TIF) which has an associated palette matrix to which the stored information points.

In general, in another aspect, the invention as defined in claim 34 comprises a technique for marking two workpieces in which two-directional scanning apparatus scans the beam to define successive rows of pixel positions in an array, some of the rows being scanned by scanning motion in a first direction, others of the rows being scanned by scanning motion in an second direction opposite to the first direction. The beam is directed to scan some of the rows at one of the marking stations and others of the rows at another of the marking stations. In embodiments of the invention, every other one of the rows is scanned in the one direction at one of the marking stations, and the intervening rows are scanned in the opposite direction at the other one of the marking stations.

Among the advantages of the invention are the following.

The invention is capable of producing an n color image by operation at n printing sites on a wide variety of substrates limited only by mechanical space and timing constraints. Variations are capable of producing process color with some degradation of throughput by overwriting existing scan lines (which would require two or more images with differing pixel parameters and would be slow). The n colors are realized with only a single laser and optical beam deflection/modulation mechanism, instead of n lasers/modulators, while high process rates are maintained.

The use of standard 256 color/indexed color .TIF file formats to define the image pixels has the advantage of permitting a variety of available software packages to be used to create the images. Use of the .TIF palette cells to directly define color/deflection, and amplitude eliminates the software and hardware overhead needed for look up table operations. Because only one byte is fetched per pixel, hardware bandwidth requirements are low and data transfer is very fast. Sixteen level grey scale printing will be possible using appropriate printing foils (coated webs). The .TIF format tag fields may be used for automatic setup to print a variety of dot densities, scan line lengths and number of scan lines. Images could be printed as composites of different files.

Using a non-rotating data storage medium to pass the image files from the image generation computer to the print control processor allows a separation of the two functions between an office and a printing location; but also permits them to coexist side by side at the printing location. In some environments it may be useful to isolate the machine operator from access to image generation functions, for quality control.

The scanner encoder which reads directly from a beam reflected from the scanner itself is more accurate, repeatable and linear than analog position sensors (e.g., variable capacitors). The encoder is also accurate in the face of a need for extremely high resolution, is generally invulnerable to vibrational modes of the scanner, and is unaffected by shaft flexibilities.

Other advantages and features will become apparent from the following description and from the claims.

### Description

Figure 1 is a perspective schematic view of a scanned marking system.
Figure 2 is a schematic plan view of fragments of workpieces being marked.
Figure 3 is a schematic side view of a scanner angle encoder.
Figure 4 is a block diagram of control circuitry.
Figures 5, 6, 7, and 8, are perspective, side, bottom, and side views, respectively of a print head.
Figures 9, 10, and 11 are side views of an alternative print head.
Figure 12 is a side view of an alternative print head.
Figures 13 and 14 are diagrams of the motion of a scanning over time for one directional and bi-directional scanning.
Figure 15 is an alternative scanning scheme using a single scanning mirror and scan lens.
Figure 16 is a top view of an image on a workpiece.

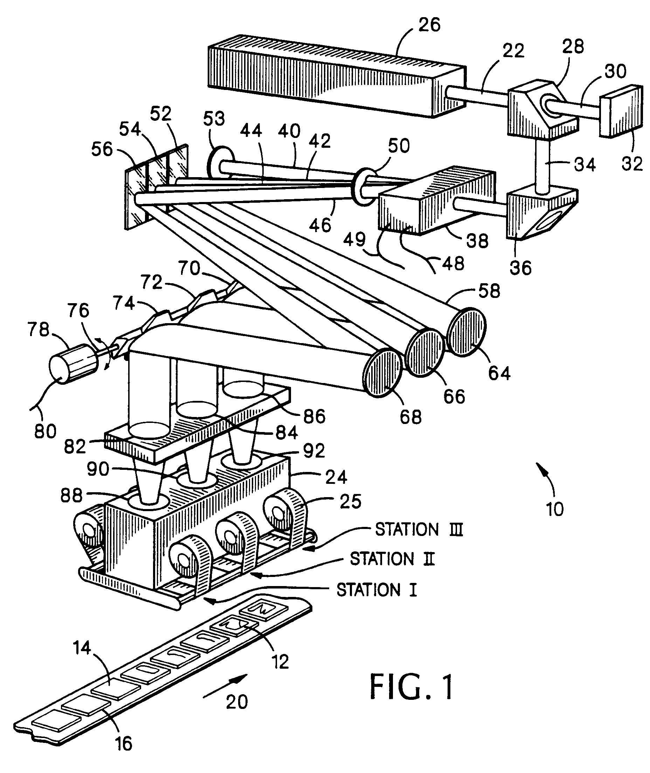

In a scanned marking system 10 (Figure 1) for marking three-color images 12 on the surfaces 14 of a series of integrated circuit packages 16 being stepped along a production line in a direction 20, a laser beam 22 is routed through a series of optical elements and ultimately through a print head 24 where it strikes print foils 25 to apply ink to the surfaces. (In Figure 1, for clarity, the packages 16 are shown at a distance below the print head. During actual printing, the bottom of the print head is adjacent to, and the foil contacts, the surfaces of the packages.)

Laser beam 22 is a beam supplied from a relatively inexpensive 25 watt CO₂ laser 26. Beam 22 has a diameter of about 3 mm. In a beam splitter 28, the beam is divided into two beams at right angles to one another. One beam 30 is delivered to a power meter 32 which detects the power in the beam and delivers an output signal in a feedback loop to control operating parameters to keep the output power of the laser at a desired level (e.g., 25 watts). The second bean 34 is reflected at a right angle by a plane mirror and delivered through an acousto-optical deflector 38. The deflector is spaced along the optical axis of the system at a sufficient distance from the laser not to be within its near field (e.g., 8"). The deflector is capable of allowing the beam to pass through along direction 40, and of redirecting (switching) a portion of the beam to any one of at least three predetermined new directions 42, 44, 46 at high speed under control of a deflection input signal 48. The deflector is also capable of altering the amplitude of energy delivered by the beam by controlling what fraction of the beam is redirected in response to an amplitude signal 49. Although the figure shows three simultaneous output beams 42, 44, 46 for clarity, in operation there is a single beam which may be switched among the three paths shown.

When the beam passes in the unswitched direction 40, it strikes a beam stop 53; this is done when the deflection input signal 48 indicates that no pixel is to be marked. Switching the beam to any of the other directions 42, 44, 46 causes it to form a mark at a pixel location on a selected one of three of the integrated circuit packages located at one of three printing stations defined by the print head.

All paths leading from the deflector pass through a long focal length plano-convex lens 50. When the beam is directed along path 42, 44, or 46, lens 50 serves to focus the beam as a small spot on a corresponding one of three convex mirrors 52, 54, 56 at a distance of about 30" from lens 50.

The three mirrors are configured and mounted so that they respectively reflect the beam along one of three slightly divergent paths 58, 60, 62 causing it to strike a corresponding one of three concave mirrors 64, 66, 68. The convexity of each of the mirrors 52, 54, 56 causes the ben to diverge as it passes to the corresponding one of the mirrors 64, 66, 68. Mirrors 64, 66, 68 collimate the beam to a diameter of about one inch and direct the beam to a corresponding one of three planar mirror sections 70, 72, 74 of an oscillating machined aluminum scanner 76. Scanner 76 is driven to swing back and forth about an axis of a shaft by a brushless DC motor 78 operated so as to simulate a galvanometer scanner and controlled by a signal 80.

Each of the scanning mirror sections reflects the beam through a corresponding one of three focusing lenses 88, 90, 92 and into a corresponding one of three printing sections of print head 24. Each lens 88, 90, 92 is a flat field scanning lens. Lenses 88, 90, and 92 are custom designed for use at the wavelength of a CO₂ laser.

Other lasers could be used, for example, a YAG laser or a HeNe laser.

### Three-Color Marking

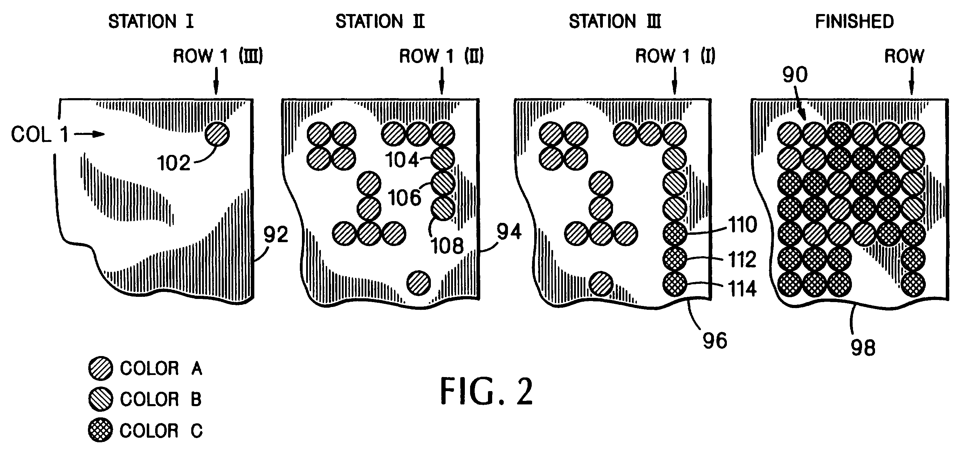

In a finished image 90 (Figure 2) marked by the system shown in Figure 1, each pixel location may have any one of three colors (A, B, or C) or may have no color. The pixels which are to be in color A are printed at station I, the pixels which are to be in color B are printed at Station II, and the pixels which are to be in color C are printed at station III. During printing, all three stations may be occupied simultaneously by surfaces to be printed. The printing of pixels at the three stations is interleaved.

A complete marking cycle for printing a full-color image on a surface includes three subcycles in which the surface successively occupies positions at the three stations I, II, and III. For example, in a first subcycle a surface 92 receives color A at station I (in the form of a partial print corresponding to color A), while a second surface 94 receives a color B at station II (in the form of a partial print corresponding to color B), and a third surface 96 receives color C at station III (a partial print for color C). In the second subcycle, surface 92 receives color B at station II, and so on. At the end of one complete marking cycle, one surface is fully printed with the three partial prints making a complete print 90, a second surface has two colors printed, and a third surface has one color printed.

Interleaved (parsed) printing of the three colors is achieved by control of the acousto-optic deflector. The scanning mirror causes scanning of the laser bean along a conceptual row of image pixels, e.g., row 1, beginning at the top of the Figure and progressing to the bottom. Each pixel of conceptual row 1 actually has three possible incarnations as a partial print pixel lying along one of the three rows--row 1(I), row 1(II), and row 1(III)--at the three stations. As the scanned beam reaches any of the columns (pixel positions) along the row, the acousto-optic deflector is capable of directing the beam to any one of the three stations so that the corresponding partial print pixel on that row may be printed. For example, pixels 102 through 114 are printed one after the other in the course of scanning row 1. The progress of the printing represented in Figure 2 is the completion of only row 1. Also, in Figure 2, for clarity, only fragments of the surfaces being printed are shown and they are spaced closer than would be possible in the actual system. Surface 98 shows all of the printed pixels of the image fragment.

### Scanner Angular Position Encoder

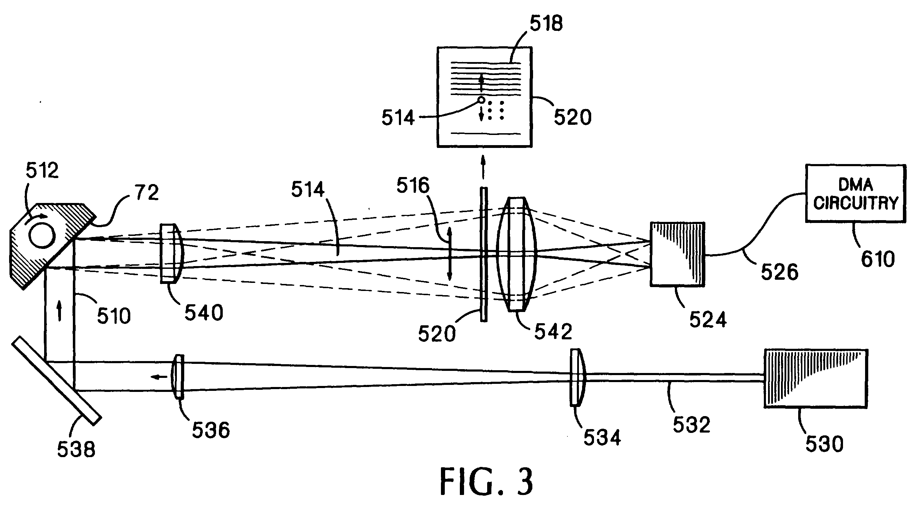

To assure that the pixels marked along each scan line on the workpiece are evenly spaced and accurately positioned, a low power (1 to 3 milliwatts) secondary laser (HeNe or diode laser, preferably visible) beam 510 (Figure 3) is reflected from the flat mirror surface of the middle mirror element 72 of the scanning mirror (Figure 1; but for clarity the position encoder is not shown in Figure 1). Another mirror surface (for example, one at a different angle) dedicated to use by the encoder could be used instead.

As the scanning mirror swings 512 (through an angular range of + or - 3.183 degrees on either side of a central angular position) to reach successive pixel locations along the scan line, a focused version 514 of the beam scans back and forth 516 across successive parallel rulings 518 formed on a transparent substrate 520 (also shown head on at the top of Figure 3), and is then projected onto a wide aperture (0.250 inches diameter) light detector 524.

The widths of the rulings compared to the diameter of the focused reflected beam are appropriate to assure that the detector output signal 526 will indicate when each line is passed. The number of rulings is at least as large as the number of pixels to be placed along a scan line and their spacing is representative of the spacing of the pixels along the scan line. During setup, the position of the ruling substrate is set so that at the moment when the focused reflected beam crosses the first ruling, the first dot position on the scan line on the workpiece is reached.

During scanning, output signal 526 provides an indication for each ruling that is crossed. The output signal 526 is fed to the DMA controller portion 610 of processor 120. When each pixel position is reached, signal 526 causes the DMA controller to fetch an associated image byte which determines whether marking is to occur at that pixel site; if so it signals the deflector to direct the pixel to be printed at the desired surface (color) 92, or 94, or 96 (Figure 2). In this way, the marking of dots along the scan line is triggered simply and accurately based on a light beam reflected from the same surface (or at least a mirror surface fabricated on or affixed to the same structure) which reflects the marking beam.

In Figure 3, beam 510 is originated from a He-Ne laser 530. Its output beam 532 is routed through a bean expander 534 and a collimating lens 536. The resulting beam has about a 1/2-inch spot size and is then reflected from a plane right angle mirror 538 onto the scanning mirror. The reflected beam from the scanning mirror is passed through a focusing lens 540 which focuses it on the ruling substrate. The beam that emanates from the ruling substrate is defocused and aimed at the detector by a lens 542. As indicated in dashed line, when the scanner is at the upper end of its stroke beam 14 is aimed near the top of the ruling substrate. As the scanner sweeps through its full range, beam 14 is swept across the ruling substrate. Lens 542 redirects and diffuses the beam in such a way that a single wide aperture detector continues to receive the beam as the scanning mirror is swept through its full range.

### Controller (Processor)

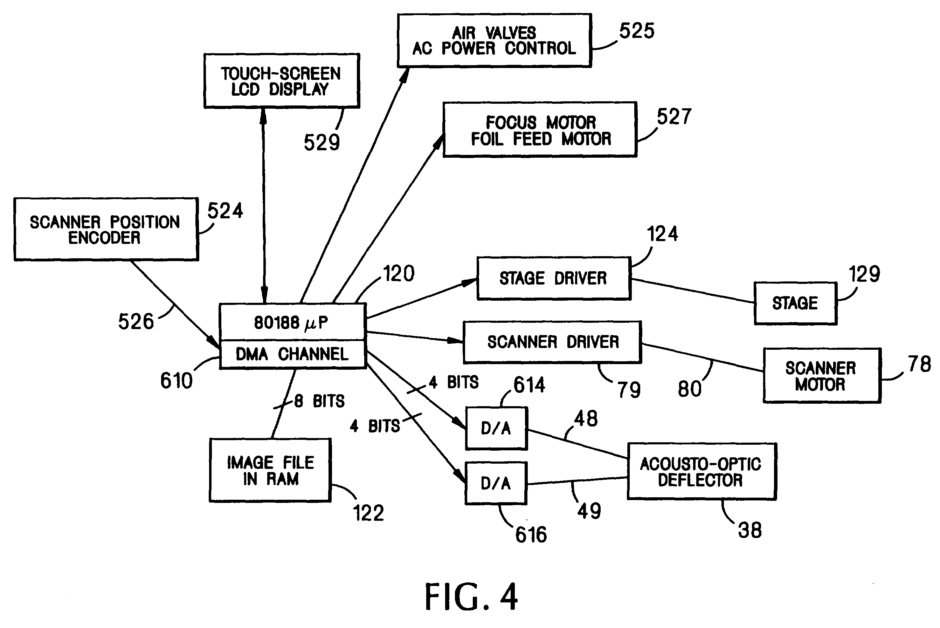

The coordination of the elements of the system is performed by a controller (processor) 120 (Figure 4). An image file 122 stored in RAM contains information sufficient to specify the colors and intensities of each of the pixels in the image to be marked. The computer controls a stage driver 124 to cause motion of a stage 129 on which the workpieces are mounted. The stage 129 is controlled both to cause large motion to relocate the workpieces at the successive printing stations after each marking sub-cycle, and finer scanning motion to move the workpieces row by row during marking. The controller also controls the scanner driver 79 to cause the scanner to swing back and forth along each of the rows of the image. By coordinating the stage driver and the scanner driver, the controller is able to cause the laser beam to raster scan all of the pixels of the image. By also controlling the acousto-optical deflector 38, the controller is able to parse the image pixels into partial prints by directing the beam to any of the three printing stations or to no station in order to print at each pixel the intended color or no color, as indicated in the image file.

The first pixel of a scan line is marked on a workpiece at the time when the scanner causes the measuring beam to reach the first ruling on the substrate. In the case of a 300-by-300 pixel image, when the 300th ruling is crossed by the measuring beam, the controller triggers the scanning mirror to reverse its motion and re-position itself to begin the next scan line. When the 300th scan line is completed, ending a marking subcycle, the controller halts the scanning process, re-positions the workpieces at their new stations and restarts the scanning.

Image file 122 is a .TIF format file and is held in a form of RAM for use during marking. The RAM may be an EPROM or SRAM (e.g., PCMCIA card) or other fast access memory, i.e., flash or D-RAM. The .TIF file data is arranged to represent the color and intensity to be marked at each pixel in the 300-by-300 pixel image field. The encoder signal 526 is routed to the DMA circuitry 610 of the control processor. As the signal indicates the arrival of the encoder beam at each successive pixel location along the scan line, the DMA circuitry causes a direct memory access of the pixel color (deflection of the beam) and intensity from the RAM. The DMA channel contains its own addressing circuitry and may run independently of any CPU involvement except for the initial setting of the channel's control words. During the encoder's deadband time, the CPU sets up the DMA control words to start on the first encoder transition signal 526. By deadband we mean the time beginning when the scanned beam, during its retrace, just passes the first ruling and ending when, at the beginning of the next forward trace, the scanned beam just reaches the first ruling. At the beginning of a new scan, the encoder transition is deglitched to insure validity and then triggers a DMA request to transfer the first image byte from EPROM or PCMCIA memory into dual D/A converters 614, 616. The high order four bits of the byte (the deflection information) are sent to one D/A converter and the low order four bits (the amplitude information) are sent to the other D/A converter. The outputs 48, 49 of the two D/A converters are respectively fed to the deflection and amplitude ports of the acousto-optical deflector 38.

Each encoder transition signal 526 resets a predetermined CPU timer value. When the timer expires, the D/A amplitude channel is reset. This in effect controls the pixel "on time" or dwell. The DMA channel expects to receive the appropriate number of transitions for each scan line. Upon detecting the last pixel in the scan line the channel automatically shuts down and waits until its control word is reinitialized for the next scan line after scanner retrace.

The .TIF file contains 8-bit pixel values each of which is capable of specifying 256 colors. The .TIF file is generated by, e.g., Photo Finish (a software package available from ZSoft Corp, of Marietta, Georgia which runs under Microsoft Windows). The file's tag fields contain the necessary information defining the image's pixel density (dots/inch), and line and column sizes. The image file is uncompressed and presented to the marking control computer on the EPROM or PCMCIA memory card.

A palette is defined for use in encoding pixels in the .TIF format. The standard .TIF palette is a 16-by-16 matrix; each entry in the matrix is a pointer to a color value in a color table. This arrangement is modified for use in driving the scanned marking system. Photo Finish offers the user the capability of editing the color palette. Here the color palette is edited to include all blank cells except for four cells. One of the non-blank cells is used to represent nonprinted color, and the other three to represent print colors. For example, if the three print colors are red, white, and blue, the palette would be configured to represent the non-print color (black) by cell 00 (hexadecimal), red by cell 3f (hexadecimal), blue by cell 9f (hexadecimal), and white by cell ff (hexadecimal). No other cells would be used. The eight-bit value in each of the four cells is specially encoded. The high order four bits of the value is used to determine deflection information. The lower order four bits represent amplitude and control the amount of laser energy delivered, or may be used to print the desired color in grey scale by using an ink medium which is sensitive to grey scale information and an associated grey-scale image file and palette.

The control processor 120 (an Intel 80188) also controls airvalves and AC power 525, servo and stepper motors 527, and a touch screen display 529 for production worker interaction.

Marking begins when the CPU starts the laser scanner. All marking functions are slaved to the laser scanner cycle (approximately 90 Hz). Some dummy scans are performed to stabilize the scanner before marking scans are performed. There are two rules which should not be violated. One rule is that at least the same number of encoder transitions as pixels per scan must be received (this may require mechanical adjustment). The second is that the encoder must be in the deadband at a specified time, i.e., with no encoder transitions occurring during the deadband.

### Print head

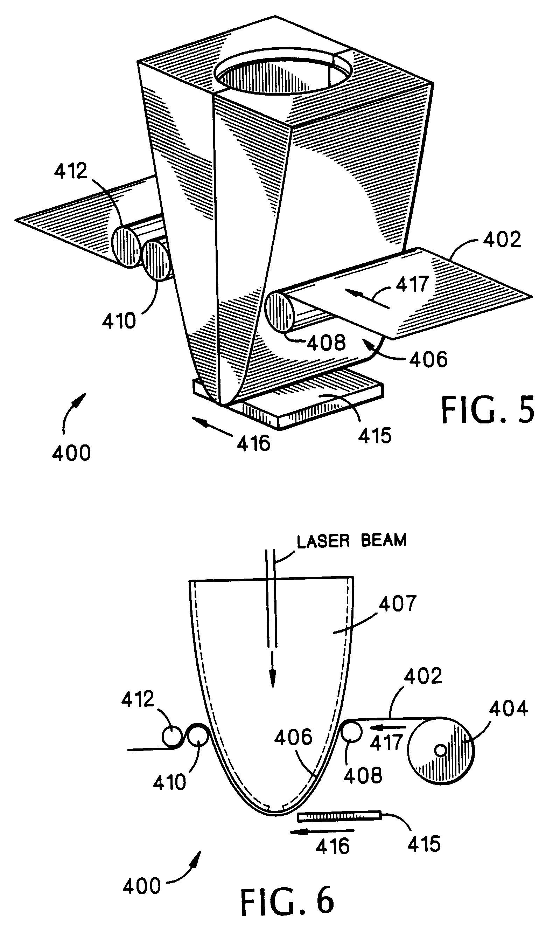

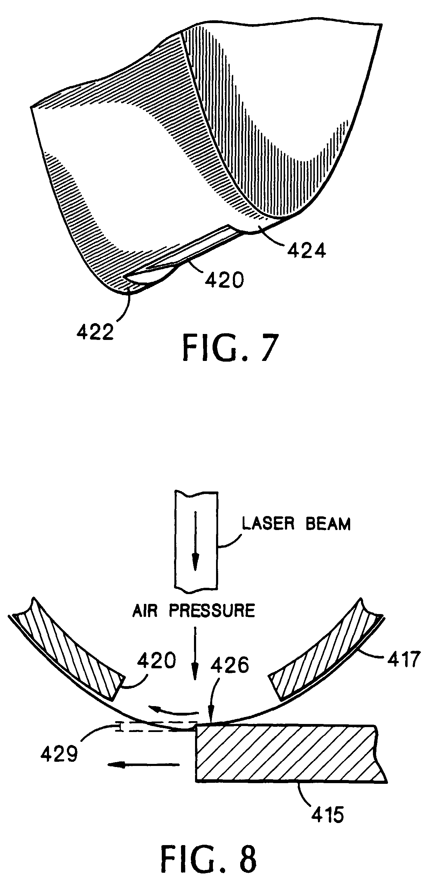

Referring to Figures 5 and 6, in one version of a print head 400 for each print station, the foil 402 is delivered from a feed roll 404 with the ink side down and pulled against a parabolic surface 406 of a hollow pressurized chamber 407 by a tension roller 408. The foil then is drawn over and conforms in contour to the parabolic surface, eventually reaching a pair of outfeed tension rollers 410, 412, and from there a take up roll (not shown). As the workpiece 415 to be marked is moved in the direction 416 during scanning, the foil is fed in direction 417 at the same or nearly the same velocity as the workpiece. Using a slightly different velocity has the advantage of setting up small shear forces at the interface between the foil and the part, which may improve the print quality. As seen in Figure 7, the apex of the parabolic surface of the print head has an aperture 420 which extends across the print head leaving parabolically contoured bordering sections 422, 424, which maintain the contour of the foil.

As seen in Figure 8, when the leading edge of workpiece 415 reaches the foil it causes the foil to contact the top surface of the workpiece along a small region 426 which runs linearly across the print head (into the page). At the same time, air pressure from within the hollow print head chamber presses the foil against the part. Tension on the foil (imparted by the tension rollers) balances the force exerted by the air pressure. The air pressure in the head may be at any level up to the equivalent pressure provided by the tension of the foil over the curved head. As the workpiece moves along to the left, the limited linear contact area 126 moves across the top surface, with the foil being peeled away shortly after it first makes contact with the surface. The laser marking occurs along the scan line along the linear contact line between the foil and the top surface.

There is a controlled time between the scanning of a line and the stripping of the foil from the workpiece along that line, and the contact time is constant for all scan lines. This improves the uniformity of the printing. Because the foil is stripped continuously at a relatively narrow strip line, the peak strip force is reduced and the workpiece does not need to be held. Because the area of contact between the foil and the workpiece is small, the amount of force required to hold the foil against the workpiece is small. No metal parts contact the workpiece; only the foil does.

This version also has disadvantages. The head must extend below the surface of the workpiece on either side, which makes it difficult to print workpieces held in trays. The scheme requires uniformity of workpiece height because the vertical interference (429 in Figure 8) between the workpiece and the foil is on the order of only .005 inches to .020 inches. One possible solution to this disadvantage would be to make the head the same width as the workpiece but form the head of compressible rubber. With multiple printing stations of different colors, the routing of the foils to avoid interference with one another also must be addressed.

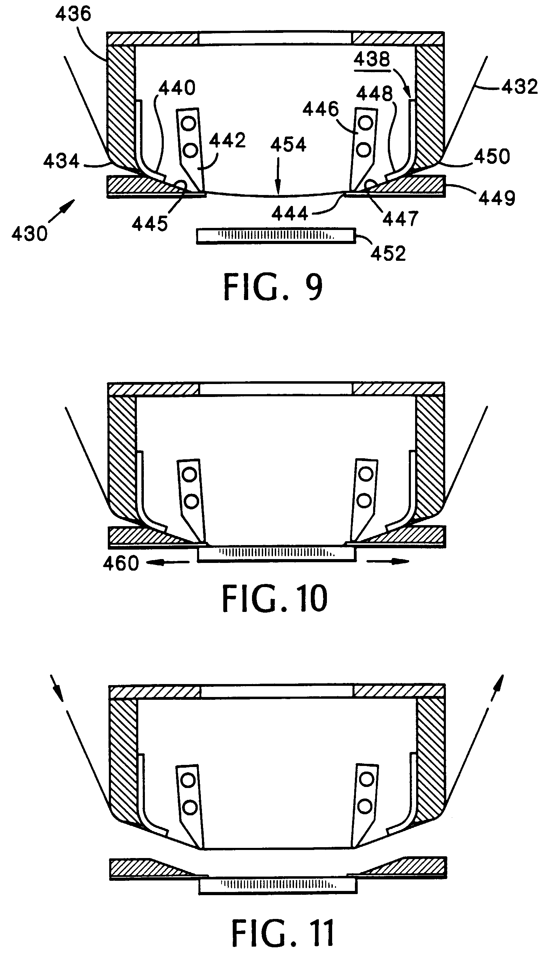

Referring to Figures 9, 10, and 11, in an alternative print head 430, foil 432 is fed over a contoured edge 434 of a wall 436 of a hollow pressurized (0.5 to 5.0 psi) chamber 438, past a rubber sealing flap 440, past a foil guide 442, across an opening 444 which is broad enough to span the entire image, past a second foil guide 446, a second rubber flap 448, and a second contoured edge 450. Opening 444 is defined in a window 449 which has two contoured surfaces 445, 447 that support the foil. Prior to workpiece 452 being moved into contact with foil 432, the portion of the foil the spans the opening 444 has a convex curved contour formed in it by the internal air pressure in the head. As the workpiece is moved toward the head, the first contact is made at the center point 454, and the area of contact then spreads outward. This helps to prevent the capture of any air bubbles between the workpiece and the foil which could degrade the print quality. Once the foil is in full contact with the upper surface of the workpiece (Figure 10), the entire image is scanned. Because the workpiece is being moved in direction 460 to reach successive scan lines, the head must also be moved at the same velocity. Alternatively, two dimensional laser beam scanning may be used.

After the image has been fully scanned, the foil is stripped from the workpiece all at once (Figure 11) by pulling the head away from the workpiece. As shown the window may be moved away from the head to aid the stripping. Then the foil is advanced to expose a new ink area for use in printing the next workpiece.

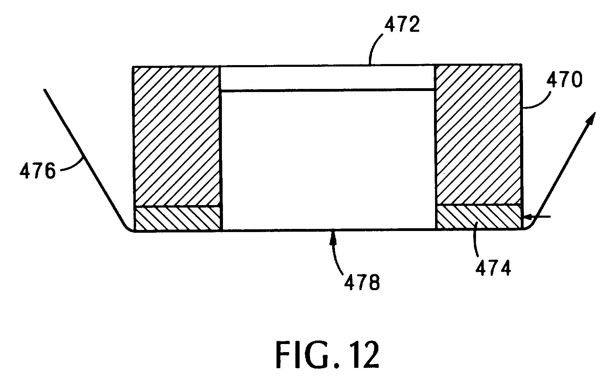

A third alternative print head, Figure 12, is a simplified version of the second alternative. Pressurized chamber 470 has a top window 472. A rubber pad 474 in the shape of a window frame is attached at the bottom of the chamber. Foil 476 is stretched across the rubber window. Only minimal pressure may be achieved against the foil before the workpiece is moved into contact because air escapes at both edges of the rubber window. But the minimal pressure which may be achieved causes the foil to curve downward lightly at its center 478. Once the foil is pressed against the rubber window, the pressurization inside the head provides a substantial force to hold the foil against the surface of the workpiece. The third alternative is simpler than the second, the foil is easier to load, and there is less chance of damage to the foil surface. But the workpiece must be able to be pulled from the foil, as there is no movable window to aid that process, more force must be applied to the workpiece, and bubbles may not be as easily eliminated.

The laser beam is delivered via a lens or window on top of the print head and passes through the hollow chamber to reach the foil.

### Optimized Raster Scanning

Although the marking of a scan line of the image is typically done only during oscillation of the scanning mirror in only one direction, and no marking is done during the reverse scan or retrace, an alternative scheme performs marking of one line of a print of a given scan line on one workpiece during one direction of oscillation and another line of a print of the given scan line on a second workpiece during the return oscillation. In the example of Figure 1, two identical monochrome images, for example, could be simultaneously marked on two surfaces at two of the printing stations by directing the scanned beam to one station during one direction of scanning and directing the scanned beam to the other printing station during the reverse direction of scanning. This allows essentially two images to be created in almost the same time that it would take to mark a single image in one direction scan marking.

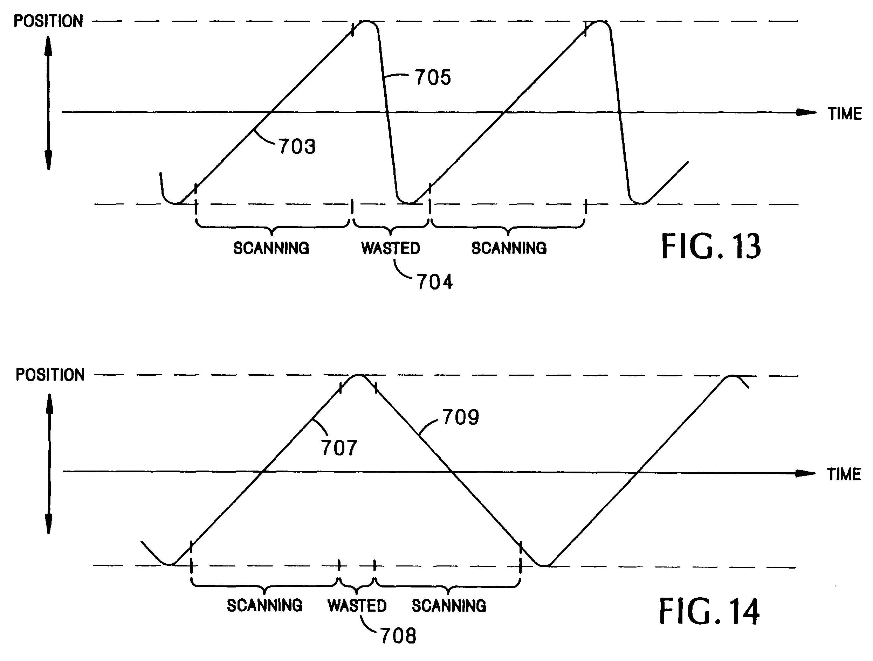

Referring to Figure 13, in one directional scanning, scanning occurs during a period 702 of relatively gradual motion 703. Scanning time is wasted during a period 704 of relatively rapid retrace motion 705. The percentage of wasted time may be on the order of 33%.

In Figure 14, with two-directional scanning, the return scan motion 707 is symmetrical with the forward scan motion 709. The percentage of wasted time 708 is considerably less, largely because the retrace time is not wasted, but also because the wasted time 708 is somewhat shorter. It is shorter because change in velocity between forward and return scans is reduced, allowing a greater portion of each scan to be used, and a smaller portion to be wasted.

Both forward and return scans in theory could be used to paint a single print more rapidly, but that would produce a zig zag appearance of the scan lines as the workpiece is moved along during scanning. Parsing the forward and return scans between two marking stations precludes the zig-zag effect while retaining the speed advantage.

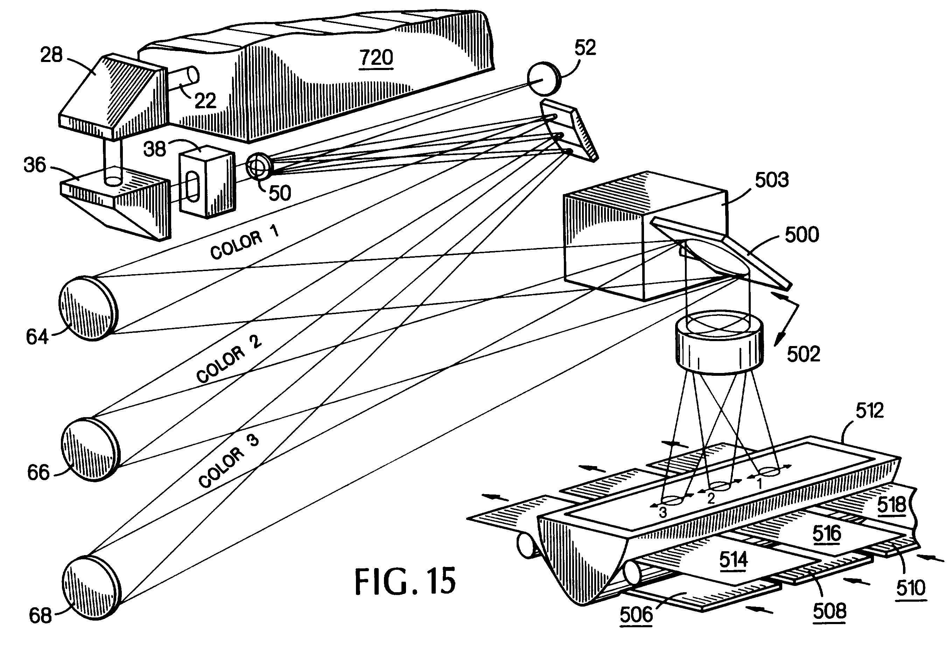

Referring to Figure 15, in an alternative scanning scheme for use with a YAG laser 720, a single flat scanner mirror 500 and a single f_{Theta} lens 502 are used to feed the beam to the three printing stations. The three mirrors 64, 66, 68, all direct the beam to the single scanner mirror 500 which is driven by a galvo 503. In this scheme, there is a single long printhead 512 for all three marking stations and the three workpieces 506, 508, 510 are moved in parallel for successive scan lines. The staging must then move each workpiece in a perpendicular direction after each partial print is finished in order to position it at the next marking station. Three foils 514, 516, 518 are also moved in parallel.

Other embodiments are within the scope of the following claims.

A wide spectrum of marking modes may be achieved because the system provides the ability to mark any pixel of an image at any one of several marking stations in each of several marking sub-cycles within a marking cycle and in each of the successive marking cycles. The printing of identical monochrome images on two workpieces and the printing of color images at three workstations (described above) are but two of possibilities. Other possibilities include the following.

More than three marking stations may be provided, offering the possibility of more than three colors in an image.

In a high mix mode production line, it would be possible to frequently change what is being printed on the workpieces being stepped along the line. For example, a chip manufacturer could "private label" chips in groups as small as a few each. Once the first batch, bearing the first logo image passes completely through the marking stations, a new logo image could be loaded into memory and the chips in the next group marked, and so on.

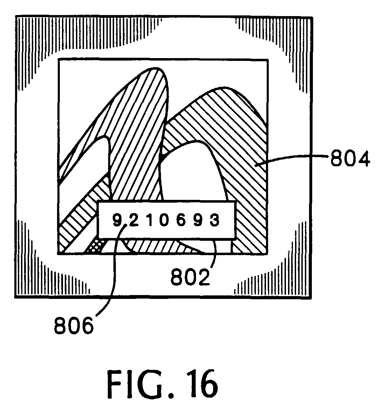

Serialization of the workpieces could be achieved by providing a window 802 in an image 804 for inclusion of the serial number 806 (Figure 16). After each marking cycle, a subimage containing the new serial number is inserted into an image buffer at the location of the window for printing the next workpiece. In the case of three station printing, the third station could be the location where the serial number is printed. The partial prints at the first two stations would have non-printed windows to leave space for the serial number to be added at the third station. The main parts of the image and the serial number could be of different resolutions.

In some implementations a bar code reader could scan a unit/lot traveler record and automatically download an appropriate image for that unit or lot from a network server.

In another example, a global memory could serve as the image transfer medium between the image generation software and the machine control processor in a Windows NT environment.

A wide variety of workpieces and surfaces may be marked.

There may be more or fewer than three marking stations.

Marking could be done by ablation of the surfaces without use of inks.

## Claims

1. Apparatus (10) for marking pixels on workpieces (16), comprising
marking stations at which said workpieces are respectively positioned for marking,
a beam of radiation (34) directed along an optical path toward said workpieces,
scanning apparatus (76, 20) for scanning said beam to define an array of pixel positions, characterized in that said apparatus includes
a switch (38) for routing said beam during said scanning so that for each of said pixel positions said beam may be routed to a selected one of said marking stations to mark one of said pixels on one of said workpieces, and
a controller for causing the switch to route the beam to any of the marking stations or to no marking station, for each of said pixel positions.

2. The apparatus of claim 1 wherein said pixels marked on said workpieces are organized as partial prints associated respectively with said marking stations.

3. The apparatus of claim 1 or 2, wherein said scanning apparatus (76) is configured to raster scan said beam.

4. The apparatus of claim 1, 2 or 3, further comprising
a processor (120) for causing each of said workpieces to be positioned at each of said marking stations for a period which spans a complete scanning of said beam.

5. The apparatus of one of claims 1 to 4, further comprising printing apparatus (24) responsive to said beam for printing different colors of said pixels respectively at different ones of said marking stations.

6. The apparatus of one of claims 2 to 5, wherein said partial prints are different pixels for different ones of said marking stations.

7. The apparatus of one of claims 1 to 6, wherein said marking stations comprise printing foils (25) which respond to radiation from said beam by depositing pigment or dye.

8. The apparatus of one of claims 1 to 7, wherein said switch comprises an acousto-optic deflector (38).

9. The apparatus of claim 8 further comprising a processor (120) for controlling said acousto-optic deflector in response to stored information corresponding to said pixels.

10. The apparatus of one of claims 1 to 9, wherein said scanning apparatus comprises an optical element (76) for sweeping said beam along a scan line, and a mechanical element for moving each of said workpieces in a direction (20) normal to said scan line.

11. The apparatus of one of claims 2 to 10, further comprising a processor for causing each said workpiece to be moved in succession to each of said marking stations for marking with corresponding ones of said partial prints.

12. The apparatus of one of claims 2 to 11, wherein there are two of said marking stations, said scanning apparatus is arranged to raster scan a series of scan lines, every other line being scanned in one direction and the intervening lines being scanned in the opposite direction, and said switch is arranged to cause marking of pixels on said every other line at one of said marking stations, and marking of pixels on said intervening lines at the other of said marking stations.

13. The apparatus of claim 12 wherein the partial prints for the workpieces at said two marking stations comprise identical, monochrome prints.

14. The apparatus of one of claims 2 to 13, wherein portions of said partial prints are identical for at least two of said workpieces and other portions are different for said partial prints.

15. The apparatus of claim 14 wherein said portions which are different comprise different serial numbers.

16. The apparatus of claim 2, further comprising a processor (120) for causing each of said workpieces to be positioned at each of said marking stations for a period which spans a complete scanning of said beam, and
printing apparatus (24) responsive to said beam for printing different colors of said pixels respectively at different ones of said marking stations, said marking stations comprising printing foils (25) which respond to radiation from said beam by depositing pigment or dye.

17. The apparatus of one of claims 1 to 16, wherein said scanning apparatus is a raster scanner (76) with a scanning mirror (72) and an apparatus for determining the angular position of said scanning mirror,
said apparatus for determining the angular position comprising
a source of a beam of radiation (510) aimed to be reflected from said scanning mirror during scanning (512),
a ruled optical element (520) for receiving said beam of radiation after reflection from said scanning mirror during scanning, said beam moving across rulings (518) on said optical element during scanning, and
a detector (524) for receiving said beam after it impinges on said ruled optical element (520) for detecting when said beam moves across successive said rulings (518) during scanning.

18. The apparatus of claim 17 wherein
said ruled optical element comprises a transparent substrate (520) bearing parallel lines (518) which obstruct the passage of said beam.

19. The apparatus of claim 17 or 18 further comprising
a lens (540) which focuses said beam in the vicinity of said ruled optical element (520), and
a lens (542) which defocuses and redirects said beam after it has passed through said ruled optical element, said beam being redirected to fall on said detector (524) during scanning.

20. The apparatus of one of claims 5 to 19, wherein said marking apparatus comprises a print head (400) for printing spots on a surface of a workpiece (415) comprising
an ink medium (402) in continuous web form and capable of responding to an intense beam of radiation by transferring spots of ink onto said surface,
a walled, internally pressurized chamber (407) having an external curved surface (406),
structure (408, 410, 412) for causing said continuous web to conform to the contour of said external curved surface and to be pulled along said external curved surface,
said external curved surface being interrupted by an aperture (420) permitting internal pressure in said chamber to be applied against said web as it is pulled along said external curved surface, said chamber having a transparent window for allowing said beam to pass within said chamber and strike said continuous web at said aperture,
elements for causing said workpiece (415) to be held with its surface in an orientation to receive spots of ink from said ink medium and to be moved towards and past said aperture at a distance near enough to said aperture to cause said surface to contact said continuous web (402) along a linear contact region and to disrupt the conformity of the web to the external surface at the contact region.

21. The apparatus of claim 20 wherein said external curved surface (406) is parabolic.

22. The apparatus of claim 20 or 21 wherein said aperture (420) is located at an apex of said external curved surface (406).

23. The apparatus of claim 21 or 22 wherein said external curved surface (406) is flat in a dimension normal to the dimension in which said curved surface is parabolic, and said aperture (420) extends across said flat dimension.

24. The apparatus of claim 23 wherein said aperture (420) does not extend completely across said curved surface (406).

25. The apparatus of one of claims 20 to 24 wherein said continuous web (402) is pulled along at a velocity which is approximately the same as a velocity of motion of the workpiece (415) relative to the print head (400).

26. The apparatus of claim 25 wherein said velocity at which said web (402) is pulled is sufficiently different from said velocity of motion of the workpiece (415) to impart a small shear force between said web and said workpiece.

27. A method for marking pixels on workpieces (16) comprising
positioning said workpieces at respective stations for marking,
directing a beam of radiation along an optical path toward said workpieces,
scanning said beam to define an array of pixel positions, characterized in that said method includes
routing said beam during said scanning so that for each of said pixel positions said beam is routed to any of the marking stations or to no marking station to mark one of said pixels on one of said workpieces.

28. The method of claim 27, wherein the marking of one pixel on one of said workpieces comprises
causing a continuous web (402) of ink medium to conform to a contour of an external curved surface (406) of a walled chamber (407),
pulling said web along said external curved surface,
internally pressurizing the chamber,
applying said internal pressure in said chamber against said web at it is pulled along said external curved surface via an aperture (420) of said external curved surface,
passing a beam within said chamber to strike said continuous web (402) at said aperture (420),
causing said workpiece to be held with its surface in an orientation to receive spots of ink from said ink medium and to be moved towards and past said aperture at a distance near enough to said aperture to cause said surface to contact said continuous web along a linear contact region which passes along said surface of said workpiece and to disrupt the conformity of the web to the external surface at the contact region.

29. The method of claim 28 further comprising pulling said web at a velocity which is approximately the same as the velocity of motion of the workpiece relative to the print head.

30. The method of claim 27, further comprising
storing image information associating each of said pixel positions with a printing color, and
using a computer to route said beam said beam to one of said marking stations to mark said associated printing color at said pixel position in accordance with said stored information.

31. The method of claim 30 wherein said stored image information comprises, for each pixel location, a deflection value and an amplitude value.

32. The method of claim 30 or 31 wherein said stored information is fetched via a DMA channel of a computer during printing.

33. The method of claim 30, 31 or 32 wherein said stored information is represented in a file format which has an associated palette matrix to which the stored information points.

34. The apparatus of claim 1, wherein two workpieces are marked, respectively positioned for marking,
a beam of radiation directed along an optical path
said scanning apparatus is a two-directional scanning apparatus for scanning said beam to define successive rows of pixel positions in said array,
whereby some of said rows are scanned by scanning motion in a first direction (707), in that others of said rows are scanned by scanning motion in a second direction (709), opposite to said first direction, and
said routing switch directes said beam to scan some of said rows at one of said marking stations and others of said rows at another of said marking stations.

35. The apparatus of claim 34 wherein said rows scanned in said first direction are scanned at one of said marking stations, and said rows scanned in said second direction are scanned at said other one of said marking stations.

## Patentansprüche

1. Vorrichtung (10) zum Markieren von Pixeln auf Werkstücken (16), mit
Markierungsstationen, an denen die Werkstücke jeweils für die Markierung positioniert werden,
einem Bestrahlungsstrahl (34), der längs eines optischen Weges auf die Werkstücke gerichtet wird,
einer Ablenkvorrichtung (76, 20) zum Ablenken des Strahls, um eine Matrix aus Pixelpositionen zu definieren, dadurch gekennzeichnet, daß die Vorrichtung enthält:
einen Schalter (38) zum Lenken des Strahls während der Ablenkung in der Weise, daß der Strahl für jede der Pixelpositionen an eine ausgewählte der Markierungsstationen gelenkt werden kann, um eines der Pixel auf einem der Werkstücke zu markieren, und
eine Steuereinrichtung, die den Schalter dazu veranlaßt, den Strahl für jede der Pixelpositionen an irgendeine der Markierungsstationen oder an keine Markierungsstation zu lenken.

2. Vorrichtung nach Anspruch 1, wobei die Pixel, die auf den Werkstücken markiert sind, als Teildrucke, die jeweils den Markierungsstationen zugeordnet sind, organisiert sind.

3. Vorrichtung nach Anspruch 1 oder 2, wobei die Ablenkvorrichtung (76) so konfiguriert ist, daß der Strahl eine Rasterabtastung ausführt.

4. Vorrichtung nach Anspruch 1, 2 oder 3, ferner mit
einem Prozessor (120), der bewirkt, daß jedes der Werkstücke an jeder der Markierungsstationen während einer Periode positioniert wird, die eine vollständige Ablenkung des Strahls überspannt.

5. Vorrichtung nach einem der Ansprüche 1 bis 4, ferner mit einer Druckvorrichtung (24), die als Antwort auf den Strahl verschiedene Farben der Pixel an jeweils verschiedenen Markierungsstationen druckt.

6. Vorrichtung nach einem der Ansprüche 2 bis 5, wobei die Teildrucke verschiedene Pixel für verschiedene der Markierungsstationen sind.

7. Vorrichtung nach einem der Ansprüche 1 bis 6, wobei die Markierungsstationen Druckfolien (25) enthalten, die auf die Strahlung von dem Strahl reagieren, indem sie Pigment oder Farbstoff aufbringen.

8. Vorrichtung nach einem der Ansprüche 1 bis 7, wobei der Schalter eine akusto-optische Ablenkeinrichtung (38) enthält.

9. Vorrichtung nach Anspruch 8, ferner mit einem Prozessor (120) zum Steuern der akusto-optischen Ablenkeinrichtung als Antwort auf gespeicherte Informationen, die den Pixeln entsprechen.

10. Vorrichtung nach einem der Ansprüche 1 bis 9, wobei die Ablenkvorrichtung ein optisches Element (76), das den Strahl längs einer Abtastlinie ablenkt, sowie ein mechanisches Element, das jedes der Werkstücke in einer Richtung (20) senkrecht zur Abtastlinie bewegt, enthält.

11. Vorrichtung nach einem der Ansprüche 2 bis 10, ferner mit einem Prozessor, der bewirkt, daß jedes der Werkstücke nacheinander an jede der Markierungsstationen bewegt wird, um sie mit entsprechenden der Teildrucke zu markieren.

12. Vorrichtung nach einem der Ansprüche 2 bis 11, wobei zwei Markierungsstationen vorhanden sind, wobei die Ablenkvorrichtung so beschaffen ist, daß sie für eine Reihe von Abtastlinien eine Rasterabtastung ausführt, wobei jede andere Linie in einer Richtung abgetastet wird und die dazwischen befindlichen Linien in der entgegengesetzten Richtung abgetastet werden, und wobei der Schalter so beschaffen ist, daß er eine Markierung der Pixel auf jeder der anderen Linien an einer der Markierungsstationen bewirkt und Pixel auf den dazwischen befindlichen Linien an der anderen der Markierungsstationen markiert.

13. Vorrichtung nach Anspruch 12, wobei die Teildrucke für die Werkstücke an den beiden Markierungsstationen identische, monochrome Drucke enthalten.

14. Vorrichtung nach einem der Ansprüche 2 bis 13, wobei Abschnitte der Teildrucke für wenigstens zwei der Werkstücke identisch sind und andere Abschnitte für die Teildrucke verschieden sind.

15. Vorrichtung nach Anspruch 14, wobei die Abschnitte, die verschieden sind, verschiedene laufende Nummern enthalten.

16. Vorrichtung nach Anspruch 2, ferner mit einem Prozessor (120), der bewirkt, daß jedes der Werkstücke an jeder der Markierungsstationen während einer Periode positioniert wird, die eine vollständige Ablenkung des Strahls überspannt, und
einer Druckvorrichtung (24), die als Antwort auf den Strahl verschiedene Farben der Pixel an jeweils unterschiedlichen der Markierungsstationen druckt, wobei die Markierungsstationen Druckfolien (25) enthalten, die auf die Strahlung vom Strahl antworten, indem sie Pigment oder Farbstoff aufbringen.

17. Vorrichtung nach einem der Ansprüche 1 bis 16, wobei die Ablenkvorrichtung eine Raster-Ablenkeinrichtung (76) mit einem Ablenkspiegel (72) und eine Vorrichtung zum Bestimmen der Winkelposition des Ablenkspiegels ist,
wobei die Vorrichtung zum Bestimmen der Winkelposition enthält:
eine Quelle für einen Bestrählungsstrahl (510), die so orientiert ist, daß er von dem Ablenkspiegel während der Ablenkung (512) reflektiert wird,
ein liniertes optisches Element (520), das den Bestrahlungssträhl empfängt, nachdem er während des Ablenkens vom Ablenkspiegel reflektiert worden ist, wobei sich der Strahl während des Ablenkens längs Linierungen (518) auf dem optischen Element bewegt, und
einen Detektor (524), der den Strahl empfängt, nachdem er auf das linierte optische Element (520) aufgetroffen ist, um zu erfassen, wann sich der Strahl während des Ablenkens über aufeinanderfolgende Linierungen (518) bewegt hat.

18. Vorrichtung nach Anspruch 17, wobei
das linierte optische Element ein lichtdurchlässiges Substrat (520) enthält, das parallele Linien (518) trägt, die den Durchgang des Strahls behindern.

19. Vorrichtung nach Anspruch 17 oder 18, ferner mit
einer Linse (540), die den Strahl in der Nähe des linierten optischen Elements (520) fokussiert, und
einer Linse (542), die den Strahl defokussiert und umlenkt, nachdem er durch das linierte optische Element gegangen ist, wobei der Strahl so umgelenkt wird, daß er während des Ablenkens auf den Detektor (524) fällt.

20. Vorrichtung nach einem der Ansprüche 5 bis 19, wobei die Markierungsvorrichtung einen Druckkopf (400) zum Drucken von Bildpunkten auf eine Oberfläche eines Werkstücks (415) enthält, mit
einem Tintenmedium (402) in Form eines ununterbrochenen Gewebes, das auf einen intensiven Bestrahlungssträhl reagieren kann, indem es Tintenbildpunkte an die Oberfläche überträgt,
einer mit Wänden versehenen, innen mit Druck beaufschlagten Kammer (407), die eine äußere gekrümmte Oberfläche (406) aufweist,
einer Struktur (408, 410, 412), die bewirkt, daß sich das ununterbrochene Gewebe an die Umrisse der äußeren gekrümmten Oberfläche anpaßt und entlang der äußeren gekrümmten Oberfläche gezogen wird,
wobei die äußere gekrümmte Oberfläche durch eine Öffnung (420) unterbrochen ist, die ermöglicht, den Innendruck in der Kammer an das Gewebe anzulegen, wenn es entlang der äußeren gekrümmten Oberfläche gezogen wird, wobei die Kammer ein lichtdurchlässiges Fenster besitzt, das dem Strahl ermöglicht, durch die Kammer zu gehen und auf das ununterbrochene Gewebe an der Öffnung aufzutreffen,
Elementen, die bewirken, daß das Werkstück (415) mit seiner Oberfläche in einer Orientierung gehalten wird, in der es Tintenbildpunkte vom Tintenmedium aufnimmt, und zur Öffnung und über die Öffnung hinweg in einem Abstand nahe genug bei der Öffnung bewegt wird, damit die Oberfläche mit dem ununterbrochenen Gewebe (402) entlang eines geradlinigen Kontaktbereichs in Kontakt gelangt, und daß die Anpassung des Gewebes an die äußere Oberfläche im Kontaktbereich unterbrochen wird.

21. Vorrichtung nach Anspruch 20, wobei die äußere gekrümmte Oberfläche (406) parabolisch ist.

22. Vorrichtung nach Anspruch 20 oder 21, wobei sich die Öffnung (420) an einem Scheitelpunkt der äußeren gekrümmten Oberfläche (406) befindet.

23. Vorrichtung nach Anspruch 21 oder 22, wobei die äußere gekrümmte Oberfläche (406) in einer Dimension, die zu der Dimension senkrecht ist, in der die gekrümmte Oberfläche parabolisch ist, eben ist, wobei sich die Öffnung (420) über die ebene Dimension erstreckt.

24. Vorrichtung nach Anspruch 23, wobei sich die Öffnung nicht vollständig über die gekrümmte Oberfläche (406) erstreckt.

25. Vorrichtung nach einem der Ansprüche 20 bis 24, wobei das ununterbrochene Gewebe (402) mit einer Geschwindigkeit gezogen wird, die angenähert der Geschwindigkeit der Bewegung des Werkstücks (415) relativ zum Druckkopf (400) ist.

26. Vorrichtung nach Anspruch 25, wobei die Geschwindigkeit, mit der das Gewebe (402) gezogen wird, von der Geschwindigkeit der Bewegung des Werkstücks (415) ausreichend verschieden ist, um zwischen dem Gewebe und dem Werkstück eine geringe Scherkraft zu erzeugen.

27. Verfahren zum Markieren von Pixeln auf Werkstücken (16), umfassend:
Positionieren der Werkstücke an jeweiligen Markierungsstationen,
Richten eines Bestrahlungsstrahls längs eines optischen Wegs auf die Werkstücke,
Ablenken des Strahls, um eine Matrix aus Pixelpositionen zu definieren, dadurch gekennzeichnet, daß das Verfahren enthält:
Lenken des Strahls während des Ablenkens in der Weise, daß der Strahl für jede der Pixelpositionen an irgendeine der Markierungsstationen oder an keine Markierungsstation gelenkt wird, um eines der Pixel auf einem der Werkstücke zu markieren.

28. Verfahren nach Anspruch 27, wobei die Markierung eines Pixels auf einem der Werkstücke umfaßt:
Veranlassen, daß sich ein ununterbrochenes Gewebe (402) eines Tintenmediums an einen Umriß einer äußeren gekrümmten Oberfläche (406) einer mit Wänden versehenen Kammer (407) anpaßt,
Ziehen des Gewebes entlang der äußeren gekrümmten Oberfläche,
Druckbeaufschlagen des Innenraums der Kammer,
Anlegen des Innendrucks der Kammer an das Gewebe, wenn es entlang der äußeren gekrümmten Oberfläche über eine Öffnung (420) der äußeren gekrümmten Oberfläche gezogen wird,
Schicken eines Strahls in die Kammer, damit er an der Öffnung (420) auf das ununterbrochene Gewebe (402) trifft,
Veranlassen, daß das Werkstück mit seiner Oberfläche in einer Orientierung gehalten wird, in der es Tintenbildpunkte von dem Tintenmedium aufnimmt, und zu der Öffnung und über sie hinweg in einem Abstand nahe genug bei der Öffnung bewegt wird, damit die Oberfläche mit dem ununterbrochenen Gewebe entlang eines geradlinigen Kontaktbereichs in Kontakt gelangt, der längs der Oberfläche des Werkstücks verläuft, und daß die Anpassung des Gewebes an die äußere Oberfläche am Kontaktbereich unterbrochen wird.

29. Verfahren nach Anspruch 28, ferner enthaltend das Ziehen des Gewebes mit einer Geschwindigkeit, die angenähert gleich der Geschwindigkeit der Bewegung des Werkstücks relativ zum Druckkopf ist.

30. Verfahren nach Anspruch 27, ferner umfassend:
Speichern von Bildinformationen, die jeder der Pixelpositionen eine Druckfarbe zuordnen, und
Verwenden eines Computers, um den Strahl an eine der Markierungsstationen zu lenken, um die zugeordnete Druckfarbe an der Pixelposition entsprechend den gespeicherten Informationen zu markieren.

31. Verfahren nach Anspruch 30, wobei die gespeicherten Bildinformationen für jede Pixelstelle einen Ablenkungswert und einen Amplitudenwert enthalten.

32. Verfahren nach Anspruch 30 oder 31, wobei die gespeicherten Informationen über einen DMA-Kanal eines Computers während des Druckens geholt werden.

33. Verfahren nach Anspruch 30, 31 oder 32, wobei die gespeicherten Informationen in einem Dateiformat dargestellt werden, das eine zugeordnete Palettenmatrix besitzt, auf die die gespeicherten Informationen zeigen.

34. Vorrichtung nach Anspruch 1, wobei zwei Werkstücke markiert werden,
ein Bestrahlungsstahl längs eines optischen Weges gerichtet wird,
die Ablenkvorrichtung eine Zweirichtungs-Ablenkvorrichtung ist, die den Strahl so ablenkt, daß aufeinanderfolgende Zeilen von Pixelpositionen in der Matrix definiert werden,
wobei einige der Zeilen durch die Ablenkbewegung in einer ersten Richtung (707) abgetastet werden und andere der Zeilen durch die Ablenkbewegung in einer zweiten Richtung (709), die zur ersten Richtung entgegengesetzt ist, abgetastet werden, und
der Lenkschalter den Strahl so richtet, daß er einige der Zeilen an einer der Markierungsstationen und andere der Zeilen an einer weiteren der Markierungsstationen abtastet.

35. Vorrichtung nach Anspruch 34, wobei die Zeilen, die in der ersten Richtung abgetastet werden, an einer der Markierungsstationen abgetastet werden und die Zeilen, die in der zweiten Richtung abgetastet werden, an der anderen der Markierungsstationen abgetastet werden.

## Revendications

1. Dispositif (10) destiné à marquer des pixels sur des pièces à usiner (16), comprenant
des stations de marquage dans lesquelles lesdites pièces à usiner sont respectivement placées pour être marquées,
un faisceau d'un rayonnement (34) dirigé le long d'un chemin optique vers lesdites pièces à usiner,
un appareil de balayage (76, 20) pour balayer ledit faisceau afin de définir une matrice des positions de pixel, caractérisé en ce que ledit dispositif comprend
un commutateur (38) pour orienter ledit faisceau lors dudit balayage de telle sorte que, pour chacune desdites positions de pixel, ledit faisceau puisse être orienté vers l'une desdites stations de marquage sélectionnée afin de marquer l'un desdits pixels sur l'une desdites pièces à usiner, et
une unité de commande destinée à amener le commutateur à orienter le faisceau sur l'une des stations de marquage ou sur aucune station de marquage, pour chacune desdites positions de pixel.

2. Dispositif selon la revendication 1, dans lequel lesdits pixels marqués sur lesdites pièces à usiner sont organisés comme des marques partielles associées respectivement auxdites stations de marquage.

3. Dispositif selon la revendication 1 ou 2, dans lequel ledit appareil de balayage (76) est configuré pour balayer de manière récurrente ledit faisceau.

4. Dispositif selon la revendication 1, 2 ou 3, comprenant en outre
un processeur (120) destiné à amener chacune desdites pièces à usiner à être placée au niveau de chacune desdites stations de marquage pour une durée qui correspond à un balayage complet dudit faisceau.

5. Dispositif selon l'une quelconque des revendications 1 à 4, comprenant en outre un appareil d'impression (24) sensible audit faisceau pour imprimer différentes couleurs desdits pixels respectivement par rapport à certaines desdites stations de marquage différentes.

6. Dispositif selon l'une quelconque des revendications 2 à 5, dans lequel lesdites marques partielles sont des pixels différents pour certaines desdites stations de marquage différentes.

7. Dispositif selon l'une quelconque des revendications de 1 à 6, dans lequel lesdites stations de marquage comprennent des feuilles d'impression (25) qui répondent aux rayons dudit faisceau en déposant un pigment ou une teinte.

8. Dispositif selon l'une quelconque des revendications 1 à 7, dans lequel ledit commutateur comprend un déflecteur acoustico-optique (38).

9. Dispositif selon la revendication 8, comprenant en outre un processeur (120) destiné à commander ledit déflecteur acoustico-optique en réponse à l'information mémorisée correspondant auxdits pixels.

10. Dispositif selon l'une quelconque des revendications 1 à 9, dans lequel ledit appareil de balayage comprend un élément optique (76) destiné à balayer ledit faisceau le long d'une ligne de balayage, et un élément mécanique destiné à déplacer chacune desdites pièces à usiner dans une direction (20) normale par rapport à ladite ligne de balayage.

11. Dispositif selon l'une quelconque des revendications 2 à 10, comprenant en outre un processeur destiné à amener chacune desdites pièces à usiner à être déplacée successivement vers chacune desdites stations de marquage pour qu'elle soit marquée avec certaines desdites marques partielles correspondantes.

12. Dispositif selon l'une quelconque des revendications 2 à 11, dans lequel on trouve deux desdites stations de marquage, ledit appareil de balayage est agencé pour balayer de manière récurrente une série de lignes de balayage, une ligne sur deux étant balayée dans une direction, et les lignes intermédiaires étant balayées dans la direction opposée, et ledit commutateur est agencé afin d'amener le marquage des pixels sur ladite une ligne sur deux dans l'une desdites stations de marquage, et le marquage de pixels sur lesdites lignes intermédiaires dans l'autre desdites stations de marquage.

13. Dispositif selon la revendication 12, dans lequel les marques partielles pour les pièces à usiner dans lesdites deux stations de marquage comprennent des marques identiques, monochromes.

14. Dispositif selon l'une quelconque des revendications 2 à 13, dans lequel des parties desdites marques partielles sont identiques pour au moins deux desdites pièces à usiner et d'autres parties sont différentes pour lesdites marques partielles.

15. Dispositif selon la revendication 14, dans lequel lesdites parties qui sont différentes comprennent des numéros de série différents.

16. Dispositif selon la revendication 2, comprenant en outre un processeur (120) destiné à amener chacune desdites pièces à usiner à être placée au niveau de chacune desdites stations de marquage pour une durée qui correspond à un balayage complet dudit faisceau, et
un appareil d'impression (24) sensible audit faisceau destiné à imprimer des couleurs différentes desdits pixels respectivement par rapport à certaines desdites stations de marquage différentes, lesdites stations de marquage comprenant des feuilles d'impression (25) qui répondent aux rayons dudit faisceau en déposant un pigment ou une teinte.

17. Dispositif selon l'une quelconque des revendications 1 à 16, dans lequel ledit appareil de balayage est un balayeur récurrent (76) pourvu d'un miroir à balayage (72) et d'un appareil destiné à déterminer la position angulaire dudit miroir à balayage,
ledit appareil destiné à déterminer la position angulaire comprenant
une source d'un faisceau d'un rayonnement (510) destinée à être réfléchie depuis ledit miroir à balayage lors du balayage (512),
un élément optique gradué (520) destiné à recevoir ledit faisceau de rayons après réflexion depuis ledit miroir à balayage lors du balayage, ledit faisceau se déplaçant d'un côté à l'autre de graduations (518) sur ledit élément optique lors du balayage, et
un détecteur (524) destiné à accueillir ledit faisceau après qu'il heurte ledit élément optique gradué (520) afin de détecter le moment où ledit faisceau se déplace d'un côté à l'autre de manière successive desdites graduations (518) lors du balayage.

18. Dispositif selon la revendication 17 dans lequel
ledit élément optique gradué comprend un support transparent (520) portant des lignes parallèles (518) qui obstruent le passage dudit faisceau.

19. Dispositif selon la revendication 17 ou 18, comprenant en outre
une lentille (540) qui focalise ledit faisceau dans le voisinage dudit élément optique gradué (520), et
une lentille (542) qui défocalise et redirige ledit faisceau après son passage au travers dudit élément optique gradué, ledit faisceau étant redirigé pour tomber sur ledit détecteur (524) lors du balayage.

20. Dispositif selon l'une quelconque des revendications 5 à 19, dans lequel ledit appareil de marquage comprend une tête d'impression (400) pour imprimer des taches sur une surface d'une pièce à usiner (415) comprenant
un support d'encre (402) se présentant sous la forme d'une bande continue et capable de répondre à un faisceau intense de rayons en transférant des taches d'encre sur ladite surface,
une chambre cloisonnée et pressurisée à l'intérieur (407) ayant une surface incurvée externe (406),
une structure (408, 410, 412) destinée à amener ladite bande continue à coïncider avec la découpe de ladite surface incurvée externe et à être tirée le long de ladite surface incurvée externe,
ladite surface incurvée externe étant interrompue par une ouverture (420) permettant à une pression interne dans ladite chambre d'être appliquée contre ladite bande tandis qu'elle est tirée le long de ladite surface incurvée externe, ladite chambre ayant une fenêtre transparente destinée à permettre audit faisceau de passer dans ladite chambre et de venir frapper ladite bande continue dans ladite ouverture,
des éléments destinés à amener ladite pièce à usiner (415) à être maintenue avec sa surface dans une orientation afin de recevoir des taches d'encre dudit support d'encre et à être déplacée vers et devant ladite ouverture à une distance suffisamment rapprochée de ladite ouverture pour amener ladite surface à entrer en contact avec ladite bande continue (402) le long d'une zone de contact linéaire et à rompre la conformité de la bande à ladite surface externe au niveau de la zone de contact.

21. Dispositif selon la revendication 20, dans lequel ladite surface incurvée externe (406) se présente sous la forme d'une parabole.

22. Dispositif selon la revendication 20 ou 21,dans lequel ladite ouverture (420) est située sur un sommet de ladite surface incurvée externe (406).

23. Dispositif selon la revendication 21 ou 22, dans lequel ladite surface incurvée externe (406) est plate dans une dimension normale par rapport à la dimension dans laquelle ladite surface incurvée externe se présente sous la forme d'une parabole, et ladite ouverture (420) s'étend d'un côté à l'autre de ladite dimension plate.

24. Dispositif selon la revendication 23, dans lequel ladite ouverture (420) ne s'étend pas complètement d'un côté à l'autre de ladite surface incurvée (406).

25. Dispositif selon l'une quelconque des revendications 20 à 24, dans lequel la bande continue (402) est tirée à une vitesse qui est approximativement égale à la vitesse de déplacement de la pièce à usiner (415) par rapport à la tète d'impression (400).

26. Dispositif selon la revendication 25, dans lequel ladite vitesse à laquelle est tirée ladite bande (402) est suffisamment différente de ladite vitesse de déplacement de la pièce à usiner (415) pour obtenir un petit effort de cisaillement entre ladite bande et ladite pièce à usiner.

27. Procédé destiné à marquer des pixels sur des pièces à usiner (16) comprenant les étapes suivantes consistant à
placer lesdites pièces à usiner au niveau des stations de marquage respectives,
diriger un faisceau d'un rayonnement le long d'un chemin optique vers lesdites pièces à usiner,
balayer ledit faisceau afin de définir une matrice des positions de pixels, caractérisé en ce que ledit procédé comprend l'étape suivante consistant à
orienter ledit faisceau lors dudit balayage de telle sorte que, pour chacune desdites positions de pixels, le faisceau est orienté vers l'une quelconque des stations de marquage ou vers aucune station de marquage pour marquer un desdits pixels sur l'une desdites pièces à usiner.

28. Procédé selon la revendication 27, dans lequel le marquage d'un pixel sur l'une desdites pièces à usiner comprend les étapes suivantes consistant à
faire coïncider une bande continue (402) de support d'encre avec une découpe d'une surface incurvée externe (406) d'une chambre munie de parois (407),
tirer ladite bande le long de ladite surface incurvée externe,
mettre la chambre sous pression de manière interne,
appliquer ladite pression interne dans ladite chambre contre ladite bande tandis qu'elle est tirée le long de ladite surface incurvée externe par une ouverture (420) de ladite surface incurvée externe,
faire passer un faisceau dans ladite chambre pour percuter ladite bande continue (402) au niveau de ladite ouverture (420),
obliger ladite pièce à usiner à être maintenue de manière à ce que sa surface se trouve dans une orientation pour recevoir des taches d'encre dudit support d'encre et à être déplacée vers et devant ladite ouverture à une distance suffisamment rapprochée de ladite ouverture pour mettre en contact ladite surface avec ladite bande continue le long d'une zone de contact linéaire qui passe le long de ladite surface de ladite pièce à usiner et pour rompre la conformité de la bande sur la surface externe de la zone de contact.

29. Procédé selon la revendication 28, comprenant en outre une étape consistant à tirer ladite bande à une vitesse qui est approximativement égale à la vitesse de déplacement de la pièce à usiner par rapport à la tête d'impression.

30. Procédé selon la revendication 27, comprenant en outre les étapes suivantes consistant à
mémoriser l'information relative à l'image associant chacune desdites positions de pixels à une couleur d'impression, et
utiliser un ordinateur pour orienter ledit faisceau vers l'une desdites stations de marquage pour marquer ladite couleur d'impression associée à ladite position de pixels conformément à ladite information mémorisée.

31. Procédé selon la revendication 30, dans lequel ladite information relative à l'image mémorisée comprend, pour chaque position de pixels, une valeur de déviation et une valeur d'amplitude.

32. Procédé selon la revendication 30 ou 31, dans lequel ladite information mémorisée est recherchée grâce à un canal d'accès direct à la mémoire d'un ordinateur lors de l'impression.

33. Procédé selon la revendication 30, 31 ou 32, dans lequel ladite information mémorisée est représentée sous un format de fichier présentant une matrice de palette, l'information mémorisée comportant des pointeurs vers cette matrice.

34. Dispositif selon la revendication 1, dans lequel deux pièces à usiner sont marquées et placées respectivement pour le marquage,
un faisceau de rayons est dirigé le long d'un chemin optique,
ledit appareil analyseur est un appareil analyseur bi-directionnel destiné à analyser ledit faisceau afin de définir des rangées successives de positions de pixel dans ladite matrice,
de sorte que certaines desdites rangées sont balayées par le mouvement de balayage dans une première direction (707), d'autres desdites rangées sont balayées par mouvement de balayage dans une seconde direction (709), opposée à ladite première direction, et
ledit commutateur dirige ledit faisceau pour balayer certaines desdites rangées dans l'une desdites stations de marquage et d'autres desdites rangées dans une autre desdites stations de marquage.

35. Dispositif selon la revendication 34, dans lequel lesdites rangées balayées dans ladite première direction sont balayées au niveau de l'une desdites stations de marquage, et lesdites rangées balayées dans ladite seconde direction sont balayées au niveau de l'autre desdites stations de marquage.
